# EUROPEAN PATENT APPLICATION

(11) **EP 4 804 011 A1**
(43) Date of publication of application: **09.09.2026**
(21) Application number: 26159753.8
(22) Date of filing: 20.02.2026
(51) Int. Cl.: G06F 8/34, G05B 19/042, G05B 19/05

(54) **SYSTEMS AND METHODS FOR GENERATING PROJECTS FROM USER DOCUMENTATION**

(30) Priority: 05.03.2025 US 202519071450
(71) Applicant: Rockwell Automation Technologies, Inc., Mayfield Heights, OH 44124 (US)
(72) Inventor: Mabini, Daniel, Mayfield Heights, OH, 44124 (US); Adamczak, Ewelina, Mayfield Heights, OH, 44124 (US)
(74) Representative: Grünecker Patent- und Rechtsanwälte PartG mbB

(57) **Abstract**

A non-transitory, tangible, computer readable medium including instructions for generating industrial automation projects that, when executed by processing circuitry, causes the processing circuitry to perform operations including requesting a plurality of documents associated with an industrial automation system, receiving one or more documents of the plurality of documents, extracting contextual data from the one or more documents, and generating an industrial automation project file by applying machine learning techniques on the contextual data, where the industrial automation system is configured to perform an industrial automation process based on the industrial automation project.

## Description

### BACKGROUND

The present disclosure relates generally to automation control and monitoring systems. More specifically, the present disclosure relates to techniques for designing automation control systems.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Design of industrial automation systems may involve a designer or controls engineer generating projects of programmatic code defining respective functions and roles for each device and/or object within the industrial automation system. The designer may generate a project by manually selecting components they want to include in a system and defining connections between the components. The designer may be unfamiliar with the authoring tool used to generate the project. Accordingly, the designer may spend a significant amount of time reviewing design documents, specification sheets of components, projects of previous designs, and the like, while building the project. Accordingly, it may be desirable to develop improved techniques for generating projects.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In certain embodiments, a non-transitory, tangible, computer readable medium may include instructions for generating industrial automation projects that, when executed by processing circuitry, causes the processing circuitry to perform operations including requesting a plurality of documents associated with an industrial automation system, receiving one or more documents of the plurality of documents, extracting contextual data from the one or more documents, and generating an industrial automation project by applying machine learning techniques on the contextual data, where the industrial automation system is configured to perform an industrial automation process based on the industrial automation project.

In another embodiment, a method for generating industrial automation projects may include receiving one or more documents associated with designing an industrial automation system, extracting contextual data from the one or more documents by performing natural language processing techniques on the one or more documents, and generating an industrial automation project by applying machine learning techniques on the contextual data, where the industrial automation project is configured to control one or more industrial automation devices within the industrial automation system to perform an industrial automation process. Additionally, the method may include presenting the industrial automation project within a graphical user interface (GUI) and modifying the industrial automation project based on one or more user inputs received via the GUI.

In another embodiment, a non-transitory, tangible, computer readable medium may include instructions for modifying industrial automation projects that, when executed by processing circuitry, causes the processing circuitry to perform operations including retrieving an industrial automation project configured to control one or more industrial automation devices within an industrial automation system, requesting a plurality of documents associated with the industrial automation system, receiving one or more documents of the plurality of documents, extracting, via natural language processing techniques, contextual data from the one or more documents, and generating, via a machine learning model, a modified version of the industrial automation project based on the contextual data. Further, the operations may include presenting the modified version of the industrial automation project file within an graphical user interface (GUI).

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic view of an operation technology (OT) environment, in accordance with an embodiment;
FIG. 2 is a block diagram of example components that could be used in the industrial automation system of FIG. 1, in accordance with an embodiment;
FIG. 3 is a perspective view of an industrial automation system as an example of the OT environment of FIG. 1, in accordance with an embodiment;
FIG. 4 is a block diagram of a process for generating a custom project based on user documentation, in accordance with an embodiment;
FIG. 5 is a screenshot of a start window of a dashboard of an industrial automation software package capable of implementing the project generation process of FIG. 4, in accordance with aspects of the present disclosure;
FIG. 6 is a screenshot of a project generation dashboard when auto-generate a project is selected from the navigation window of FIG. 5, in accordance with aspects of the present disclosure;
FIG. 7 is a screenshot of the project generation dashboard when a user uploads an input output (IO) sheet, in accordance with aspects of the present disclosure;
FIG. 8 is a screenshot of the project generation dashboard when a user uploads a controls layout, in accordance with aspects of the present disclosure;
FIG. 9 is a screenshot of the project generation dashboard requesting an optional bill of materials, in accordance with aspects of the present disclosure;
FIG. 10 is a screenshot of the project generation dashboard when a user uploads a piping and instrumentation diagram (P&ID), in accordance with aspects of the present disclosure;
FIG. 11 is a screenshot of the project generation dashboard when a user may provide additional standards or customization details or select create project, in accordance with aspects of the present disclosure;
FIG. 12 is a screenshot of the project generation dashboard when a user provides additional standards or customization details, in accordance with aspects of the present disclosure;
FIG. 13 is a screenshot of the generated project within the dashboard when a user selects create project, in accordance with aspects of the present disclosure; and
FIG. 14 illustrates a flow chart of a process for auto-generating a custom industrial automation project based on user documentation.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As used herein, the term "computing system" refers to an electronic computing device such as, but not limited to, a single computer, virtual machine, virtual container, host, server, edge device, laptop, tablet, and/or mobile device, or to a plurality of electronic computing devices working together to perform the function described as being performed on or by the computing system. As used herein, the term "medium" refers to one or more non-transitory, computer-readable physical media that together store the contents described as being stored thereon. Embodiments may include nonvolatile secondary storage, read-only memory (ROM), and/or random-access memory (RAM). As used herein, the term "application" refers to one or more computing modules, programs, processes, workloads, threads and/or a set of computing instructions executed by a computing system. Example embodiments of an application include software modules, software objects, software instances and/or other types of executable code.

The present patent application is directed to techniques for generating projects of industrial automation systems by leveraging generative AI or machine learning to analyze and extract features from user documentation, such as control layouts, input/output (IO) sheets, bill of materials (BOMs), piping and instrumentation diagrams (P&IDs), and the like.

Design of industrial automation systems often involves generating programmatic code defining the logic controlling the system and defining the input/output relationships between industrial automation devices. A designer may interact with an authoring tool to generate a project of programmatic code by manually selecting components (e.g., devices) they want to include in a system and defining connections between the components. Designers may be unfamiliar with the authoring tool, such as how to allocate devices to a function or how to define relationships between devices in the system. Accordingly, designers may spend a significant amount of time familiarizing themselves with the authoring tool, as well as, reviewing design documents, specification sheets of components, projects of previous designs, and the like, while building the project.

The disclosed techniques leverage AI and/or machine learning and natural language processing to parse user documentation and generate a project file based on the user documentation. For example, systems and methods of the present disclosure may utilize generative AI and natural language processing to identify devices by parsing controls layouts, generate routines and tasks by parsing process diagrams, create tags by parsing BOMs and/or controls layouts, and generate a project file containing these extracted features. The system may guide users (e.g., designers) through a series of questions and prompts requesting different types of user documentation and may generate and provide the users with project files based on their responses. The system may allow users to edit and customize the generated project files. For example, users may add additional components or connections to the project, rename components or aspects of the project, and the like. Users may utilize the system to automatically generate new project files, as well as, to automatically troubleshoot or modify existing project files based on their documentation. Accordingly, by leveraging generative AI and documents users may already have on hand, the presently disclosed techniques may reduce design time for industrial automation systems, reduce human error in project files, and reduce the time users spend familiarizing themselves with authoring tools.

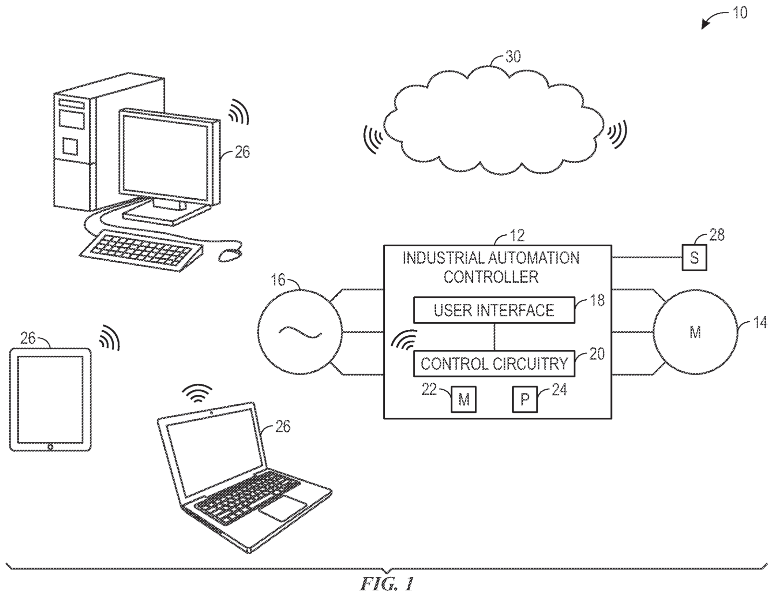

By way of introduction, FIG. 1 is a schematic view of an example operation technology (OT) environment 10 in which the embodiments described herein may be implemented. As shown, the OT environment 10 is an industrial automation system that includes a controller 12 and an actuator 14 (e.g., a motor). The OT environment 10 may also include, or be coupled to, a power source 16. The power source 16 may include a generator, an external power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger OT environment 10. In the instant embodiment, the controller 12 includes a user interface 18, such as a human machine interface (HMI), and a control system or control circuitry 20, which may include a memory 22 and a processor 24. The controller 12 may include a cabinet or some other enclosure for housing various components of the OT environment 10, such as a motor starter, a disconnect switch, etc.

The control circuitry 20 may be programmed (e.g., via computer readable code or instructions stored on the memory 22, such as a non-transitory computer readable medium, and executable by the processor 24) to provide signals for controlling the motor 14. In certain embodiments, the control circuitry 20 may be programmed according to a specific configuration desired for a particular application. For example, the control circuitry 20 may be programmed to respond to external inputs, such as reference signals, alarms, command/status signals, etc. The external inputs may originate from one or more relays or other electronic devices. The programming of the control circuitry 20 may be accomplished through software or firmware code that may be loaded onto the internal memory 22 of the control circuitry 20 (e.g., via a locally or remotely located computing device 26) or programmed via the user interface 18 of the controller 12. The control circuitry20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like.

In some embodiments, the controller 12 may be communicatively coupled to one or more sensors 28 for detecting operating temperatures, voltages, currents, pressures, flow rates, and other measurable variables associated with the OT environment 10. With feedback data from the sensors 28, the control system or control circuitry 20 may keep detailed track of the various conditions under which the OT environment 10 may be operating. For example, the feedback data may include conditions such as actual motor speed, voltage, frequency, power quality, alarm conditions, etc. In some embodiments, the feedback data may be communicated back to the computing device 26 for additional analysis.

The computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The user may use licensed software and/or subscription services to create, analyze, and otherwise develop the project. The computing device 26 may send a project to the controller 12 for execution. Execution of the industrial automation project causes the controller 12 to control components (e.g., motor 14) within the OT environment 10 through performance of one or more tasks and/or processes. In some applications, the controller 12 may be communicatively positioned in a private network and/or behind a firewall, such that the controller 12 does not have communication access outside a local network and is not in communication with any devices outside the firewall, other than the computing device 26. The controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

The computing device 26 may be communicatively coupled to a cloud server 30 or remote server via the internet, or some other network. In one embodiment, the cloud server 30 may be operated by the manufacturer of the controller 12, a software provider, a seller of the controller 12, a service provider, operator of the controller 12, owner of the controller 12, etc. The cloud server 30 may be used to help customers create and/or modify projects, to help troubleshoot any problems that may arise with the controller 12, develop policies, or to provide other services (e.g., project analysis, enabling, restricting capabilities of the controller 12, data analysis, controller firmware updates, etc.). The remote/cloud server 30 may be one or more servers operated by the manufacturer, software provider, seller, service provider, operator, or owner of the controller 12. The remote/cloud server 30 may be disposed at a facility owned and/or operated by the manufacturer, software provider, seller, service provider, operator, or owner of the controller 12. In other embodiments, the remote/cloud server 30 may be disposed in a datacenter in which the manufacturer, software provider, seller, service provider, operator, or owner of the controller 12 owns or rents server space. In further embodiments, the remote/cloud server 30 may include multiple servers operating in one or more data center to provide a cloud computing environment.

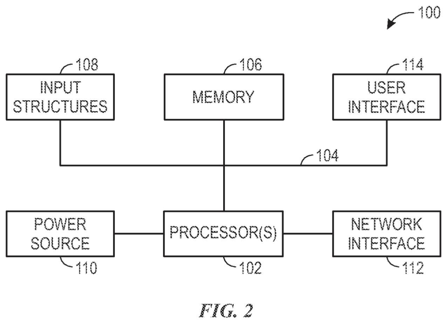

FIG. 2 illustrates a block diagram of example components of a computing device 100 that could be used as the computing device 26, the cloud/remote server 30, the controller 12, or some other device provided by the present disclosure. As used herein, the computing device 100 may be implemented as one or more computing systems including laptop, notebook, desktop, tablet, HMI, or workstation computers, as well as server type devices or portable, communication type devices, such as cellular telephones and/or other suitable computing devices.

As illustrated, the computing device 100 may include various hardware components, such as one or more processors 102, one or more busses 104, memory 106, input structures 108, a power source 110, a network interface 112, a user interface 114, and/or other computer components useful in performing the functions described herein.

The one or more processors 102 may include, in certain implementations, microprocessors configured to execute instructions stored in the memory 106 or other accessible locations. Alternatively, the one or more processors 102 may be implemented as application-specific integrated circuits (ASICs), field-programmable gate arrays (FPGAs), and/or other devices designed to perform functions discussed herein in a dedicated manner. As will be appreciated, multiple processors 102 or processing components may be used to perform functions discussed herein in a distributed or parallel manner.

The memory 106 may encompass any tangible, non-transitory medium for storing data or executable routines. Although shown for convenience as a single block in FIG. 2, the memory 106 may encompass various discrete media in the same or different physical locations. The one or more processors 102 may access data in the memory 106 via one or more busses 104.

The input structures 108 may allow a user to input data and/or commands to the device 100 and may include mice, touchpads, touchscreens, keyboards, controllers, and so forth. The power source 110 can be any suitable source for providing power to the various components of the computing device 100, including line and battery power. In the depicted example, the device 100 includes a network interface 112. Such a network interface 112 may allow communication with other devices on a network using one or more communication protocols. In the depicted example, the device 100 includes a user interface 114, such as a display that may display images or data provided by the one or more processors 102. The user interface 114 may include, for example, a monitor, a display, and so forth. As will be appreciated, in a real-world context a processor-based system, such as the computing device 100 of FIG. 2, may be employed to implement some or all of the present approach, such as performing the functions of the controller, the computing device 26, and/or the cloud/remote server 30 shown in FIG. 1, as well as other memory-containing devices.

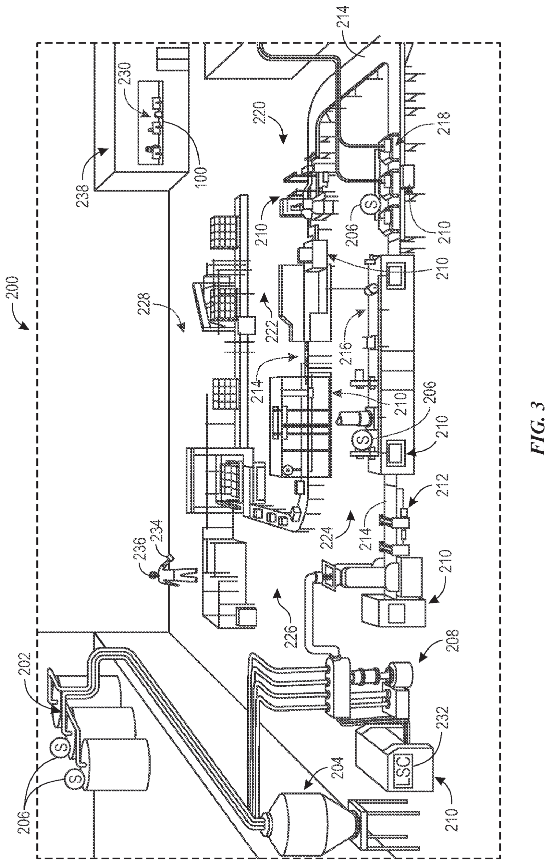

FIG. 3 is a perspective view of an example industrial automation system 200 employed by a food manufacturer. It should be noted that although the example industrial automation system 200 of FIG. 3 is directed at a food manufacturer, the present embodiments described herein may be employed within any suitable industry, such as automotive, cosmetics, chemical manufacturing/processing, mining, hydrocarbon production, manufacturing, and the like. The following brief description of the example industrial automation system 200 employed by the food manufacturer is provided herein to help facilitate a more comprehensive understanding of the OT environment to which the techniques described herein may be applied. As such, the embodiments described herein should not be limited to being applied to the example depicted in FIG. 3.

The example industrial automation system 200 for a food manufacturer may include any number of machines, such as silos 202 and tanks 204. The silos 202 and the tanks 204 may store different types of raw material, such as grains, salt, yeast, sweeteners, flavoring agents, coloring agents, vitamins, minerals, and preservatives. In some embodiments, sensors 206 may be positioned within or around the silos 202, the tanks 204, or other suitable locations within the industrial automation system 200 to measure certain properties, such as temperature, mass, volume, pressure humidity, and the like.

The raw materials may be provided to a mixer 208, which may mix the raw materials together according to a specified ratio. The mixer 208 and other machines in the industrial automation system 200 may employ certain industrial automation devices 210 to control the operations of the mixer 208 and other machines. The industrial automation devices 210 may include controllers (e.g., industrial automation controller 12), input/output (I/O) modules, motor control centers (e.g., control system or control circuitry 20), motors (e.g., actuator 14), human-machine interfaces (e.g., user interface 18), operator interfaces, contactors, starters, sensors (e.g., sensor 28, sensors 206), conveyors, drives, relays, protection devices, switchgear, compressors, firewall, network switches (e.g., Ethernet switches, modular-managed, fixed-managed, service-router, industrial, unmanaged, etc.) and the like.

The mixer 208 may provide a mixed compound to a depositor 212, which may deposit a certain amount of the mixed compound onto conveyor 214. The depositor 212 may deposit the mixed compound on the conveyor 214 according to a shape and amount that may be specified to a control system for the depositor 212. The conveyor 214 may be any suitable conveyor system that transports items to various types of machinery across the industrial automation system 200. For example, the conveyor 214 may transport deposited material from the depositor 2 12 to an oven 216, which may bake the deposited material. The baked material may be transported to a cooling tunnel 218 to cool the baked material, such that the cooled material may be transported to a tray loader 220 via the conveyor 214. The tray loader 220 may include machinery that receives a certain amount of the cooled material for packaging. By way of example, the tray loader 220 may receive 25 ounces of the cooled material, which may correspond to an amount of cereal provided in a cereal box.

A tray wrapper 222 may receive a collected amount of cooled material from the tray loader 220 into a bag, which may be sealed. The tray wrapper 222 may receive the collected amount of cooled material in a bag and seal the bag using appropriate machinery. The conveyor 214 may transport the bagged material to case packer 224, which may package the bagged material into a box. The boxes may be transported to a palletizer 226, which may stack a certain number of boxes on a pallet that may be lifted using a forklift or the like. The stacked boxes may then be transported to a shrink wrapper 228, which may wrap the stacked boxes with shrink-wrap to keep the stacked boxes together while on the pallet. The shrink-wrapped boxes may then be transported to storage or the like via a forklift or other suitable transport vehicle.

To perform the operations of each of the devices in the example industrial automation system 200, the industrial automation devices 210 may be used to provide power to the machinery used to perform certain tasks, provide protection to the machinery from electrical surges, prevent injuries from occurring with human operators in the industrial automation system 200, monitor the operations of the respective device, communicate data regarding the respective device to a supervisory control system 230, and the like. In some embodiments, each industrial automation device 210 or a group of industrial automation devices 210 may be controlled using a local control system 232. The local control system 232 may include receive data regarding the operation of the respective industrial automation device 210, other industrial automation devices 210, user inputs, and other suitable inputs to control the operations of the respective industrial automation devices 210.

An operator device 234 is an example of the computing device 26 that enables an operator 236 to access or interface with other industrial automation devices 210 and/or computing devices. For example, the operator device 234 may include the processor 102, busses 104, memory 106, input structures 108, power source 110, network interface 112, and user interface 114.

Collectively, any or all of the machines (e.g., mixer 208, palletizer 226), the industrial automation devices 210, the computing devices 26, the cloud server 30, the supervisory control system 230, and any other elements of FIG. 3 may constitute the OT environment. These elements may communicate across the OT environment via a network (e.g., a local area network (LAN)). In some embodiments, the network may be managed from a network operations center (NOC) 238. The NOC 238 is a centralized location from which a network administrator may monitor and manage the network. For example, the NOC 238 may include a central computing system which executes a network security system, monitors traffic into and out of the network, maintains databases, and manages security policies. As shown, the NOC 238 is local to the industrial automation system 200, but in other embodiments, the NOC 238 may be located at a remote location.

During operation of the industrial automation system 200, each industrial automation device 210 or a group of industrial automation devices 210 may be controlled according to one or more industrial automation projects executed by the supervisory control system 230 and/or the local control system 232. As discussed above, users may define the one or more industrial automation projects using an authoring tool, such as a native application running on a suitable computing device (e.g., computing device 26, computing device 100) or a website accessible via a browser application, a software application, or the like. However, the users may be unfamiliar with the authoring tool, such as how to allocate devices to functions or how to define relationships between devices in the system. Thus, the users may spend a significant amount of time familiarizing themselves with the authoring tool, as well as, reviewing design documents, specification sheets of components, previous industrial automation projects, and the like, while building the one or more industrial automation projects.

Accordingly, the present disclosure seeks to reduce the time users spend familiarizing themselves with authoring tools, which may in turn allow the users to design more industrial automation projects in a shorter amount of time, with less human error. Specifically, the present disclosure is directed towards a system and method for generating an industrial automation project file based on user documentation by leveraging machine learning and natural language processing to extract features from the user documentation. For example, the systems and methods of the present disclosure may utilize generative AI and natural language processing to identify devices by parsing controls layouts, generate routines and tasks by parsing process diagrams, create tags by parsing BOMs and/or controls layouts, and then generate a project file containing these extracted features. The system may guide users (e.g., designers) through a series of questions and prompts requesting different types of user documentation and may generate and provide the users with project files based on their responses. Users may utilize the system to automatically generate new project files, as well as, to automatically troubleshoot or modify existing project files based on their documentation. Thus, the presently disclosed techniques may reduce design time for industrial automation systems, reduce human error in project files, and reduce the time users spend familiarizing themselves with authoring tools.

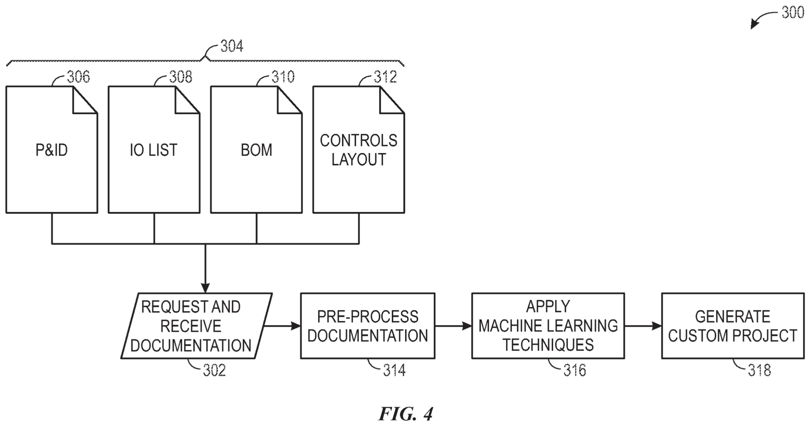

With the foregoing in mind, FIG. 4 illustrates a block diagram of a process 300 for generating a custom industrial automation project based on user documentation, in accordance with embodiments described herein. Although the following description of the process 300 is described in a particular order, which represents a particular embodiment, it should be noted that the process 300 may be performed in any suitable order. Moreover, although the following description of process 300 is described as being performed by the computing device 26, it should be noted that the process 300 may be performed by any suitable computing device (e.g., operator device 234), or a combination of computing devices, within the OT environment.

Referring now to FIG. 4, at block 302, the computing device 26 may request and receive documentation 304 from a user of an industrial automation project authoring tool. For example, the computing device 26 may display an offer to auto-generate a custom project within an authoring tool, such as an industrial automation software package accessible via a web browser or running as a native application. The computing device 26 may receive a user input accepting the offer to auto-generate a custom project and may guide the user through a series of questions and prompts in response. For example, the computing device 26 may request one or more piping and instrumentation diagrams (P&IDs) 306, input/output (I/O) sheets 308, bills of materials (BOMs) 310, controls layouts 312, and any other suitable documentation the user may have on hand, such as hand drawn schematics, process diagrams, and the like.

A P&ID 306 is a schematic diagram of an industrial process that shows interconnections between industrial equipment (e.g., silos 202, tanks 204, mixer 208), process piping (e.g., flow directions, pipelines, etc.), industrial automation devices (e.g., industrial automation devices 210, sensors, valves, etc.), control systems (e.g., supervisory control system 230, local control system 232), and the like. Accordingly, P&IDs 306 may facilitate the design of industrial automation projects, as they illustrate physical equipment and systems used to carry out industrial processes, as well as how the equipment and systems connect and interact.

An I/O sheet or list 308 is a table of the inputs and outputs of a control system, such as various input and output devices connected to a controller of the control system. Input devices may include sensors (e.g., sensor 28, sensors 206), human-machine interfaces (e.g., user interface 18), and the like. Output devices may include actuators (e.g., actuator 14) and any other devices controlled according to feedback from the input devices. Accordingly, I/O sheets 308 may include device tags, device descriptions, signal types, and the like. Thus, I/O sheets 308 may facilitate the design of industrial automation projects.

A BOM 310 is a hierarchical list of the raw materials, assemblies, components, parts, and the like, that are associated with achieving a certain output (e.g., end product) of an industrial process. For industrial automation systems, a BOM 310 may include a database of the systems, process loops or lines (e.g., assembly lines), and devices of the respective industrial automation system. The BOM 310 may be hierarchical. For example, each system in the database may include one or more process loops or lines, each process loop or line may include one or more devices, and so on. The BOM 310 may include part numbers, descriptions, and other designations identifying specific devices and components within the industrial automation system. Therefore, BOMs 310 may facilitate tag creation within industrial automation projects.

A controls panel layout or controls layout 312 describes the physical arrangement and organization of components within a control system. That is, a controls layout 312 may illustrate or represent the organization and connections between components within a physical control panel of an industrial automation system. For industrial automation systems, a controls layout 312 may include data regarding I/O relationships or points, tags, program logic, data structure, and the like, which may be used to define, manage, and troubleshoot how the control system interacts with and controls industrial automation equipment to perform one or more industrial processes. Accordingly, controls layouts 312 may facilitate the design of industrial automation projects, as they outline how control systems interact with physical equipment to carry out industrial processes.

The computing device 26 may request each type of documentation 304 in a sequential or step-by-step fashion. For example, the computing device 26 may request a P&ID 306, request an I/O sheet 308 after receiving a P&ID 306 file or an indication to move forward in the series of prompts (e.g., in cases where the user does not have or want to upload a P&ID), and so on. Additionally, or alternatively, the computing device 26 may prompt the user to upload each type of documentation 304 concurrently, or substantially at the same time. The computing device 26 may indicate one or more types of documentation 304 as required or optional. For example, the computing device 26 may indicate that a controls layout 312 is required and may not allow the user to move forward in the series of prompts until a controls layout 312 is uploaded. Conversely, the computing device 26 may indicate that a BOM 310 is optional and may allow the user to move forward in the series of prompts with or without uploading a BOM 310. Additionally, the computing device 26 may ask the user one or more questions to gather additional context or information regarding the project. For example, the computing device 26 may ask the user if the project needs to comply with any industry or regulatory standards (e.g., pharmaceutical standards), and/or if the project needs to conform to any specific customization (e.g., internal practices and preferences).

Once the computing device 26 has guided the user through the series of questions and prompts and received one or more documents, at block 314, the computing device 26 may pre-process the documentation 304 for context. For example, the computing device 26 may utilize natural language processing techniques to extract unstructured text (e.g., perform optical character recognition), convert data in the documentation 304 into machine-readable formats (e.g., generate text embeddings of text within the documentation 304), analyze and infer the structure of text within the documentation 304, generate summaries of text within the documentation 304, and the like. The computing device 26 may also utilize image processing techniques to analyze and describe images and visual features within the documentation 304, convert data in the documentation 304 into machine-readable formats, and the like. Additionally, the computing device 26 may compile the results of the pre-processing (e.g., contextual data) into an index, database, matrix, or any other suitable machine-readable data structure. The results may be organized or tagged according to an associated document (e.g., a text embedding extracted from a BOM 310 may be index or tagged along with other features extracted from the BOM 310), predicted context (e.g., data describing device allocations may be tagged or indexed accordingly), and the like.

At block 316, the computing device 26 may apply machine learning techniques on the contextual data extracted/generated from the pre-processing of block 314. For example, the computing device 26 may input the contextual data into a large language model (LLM) with a prompt to generate an industrial automation project based on the contextual data. The LLM may be trained according to a number (e.g., thousands) of lines of programmatic code and a set of industrial automation rules. The lines of programmatic code may be portions of historical industrial automation projects (e.g., projects associated with or used to control a physical industrial automation system in the past), entire historic industrial automation projects, portions of theoretical industrial automation projects (e.g., projects that follow industrial automation rules but are not associated with or being used to control a physical industrial automation system), or a combination thereof. The set of industrial automation rules may include guidelines that define or dictate relationships between industrial automation devices or components. For example, the set of rules may define or dictate connections between devices (e.g., a rule that an input of one device should not be connected to an input of another device), a preference that two devices should not be used together, a preference that two devices should be used together, and the like. The set of rules may also reflect preferences for the industrial automation project, such as naming conventions within the project, and the like. The LLM and its training data (e.g., lines of programmatic code and rules set) may be stored locally on the computing device 26 and/or stored remotely in the cloud server 30. The cloud server 30 may be owned and operated by an entity associated with the user (e.g., the owner of the controller 12). Accordingly, the LLM and its training data may be securely stored, thereby preventing data breaches.

At block 318, the computing device 26 may generate a custom project file based on the documentation 304. The computing device 26 may generate the custom project file using the machine learning techniques applied at block 316. For example, the LLM may output the custom project file based on the contextual data extracted from the documentation 304 (e.g., at block 314). Accordingly, the custom project file may be more or less robust based on the documentation 304 received from the user. The LLM may analyze the contextual data for information regarding specific automation controllers and devices, processes or routines, tags, and tasks within the documentation 304, or a combination thereof. For example, the LLM may define and allocate devices and controllers within the custom project file based on information extracted from a controls layout 312, define routines and tasks within the custom project file based on information extracted from a P&ID 306, and define and allocate tags within the custom project file based on information extracted from a BOM 310 and/or controls layout 312.

While not illustrated in FIG. 4, the computing device 26 may receive inputs from the user to edit and modify the custom project file from block 318. For example, the computing device 26 may receive user inputs adding additional components or connections to the project, renaming components or aspects of the project, allocating specific devices or controllers to functions within the project, adding tags to the project, and the like.

Additionally, while the process 300 of FIG. 4 depicts the computing device 26 generating a new project file based on user documentation 304, the computing device 26 may perform substantially the same process to troubleshoot or modify existing projects based on user documentation 304. For example, the computing device 26 may display an offer to troubleshoot or modify an existing project within the authoring tool while the user has the existing project open. When the computing device 26 receives a user input accepting the offer, the computing device 26 may guide the user through the series of questions and prompts requesting documentation 304 and additional information, pre-process the received documentation 304 and additional information to extract and/or generate contextual data, apply generative AI or machine learning techniques on the contextual data, and output a modified version or copy of the existing project file. The modified copy may emphasize any changes to the project file (e.g., new devices may be bolded and/or have an associated indicator, removed features may be displayed in a grayed out or semi-transparent matter, and the like). Additionally, or alternatively, the computing device 26 may generate a text summary describing edits, modifications, or suggestions associated with the autogenerated modified project, along with rationale associated with some or all of the changes. For example, the summary may indicate that a device was removed from the project file for being incompatible with another device, improperly connected to another device, and the like.

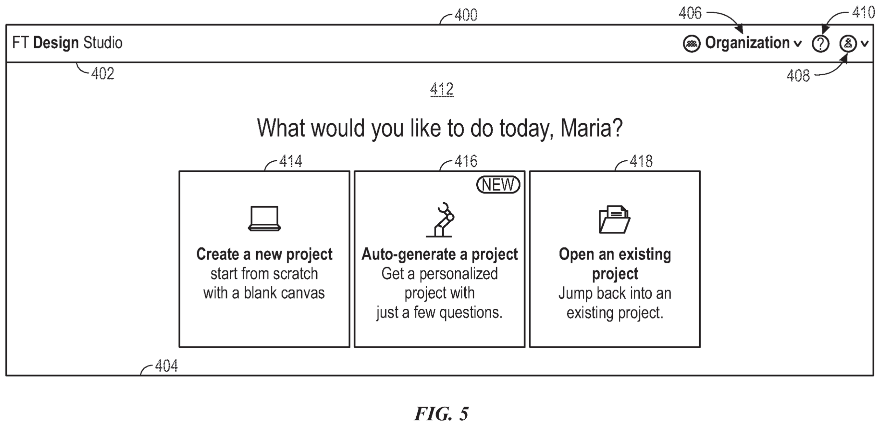

With the foregoing in mind, FIG. 5 is a screenshot of a dashboard 400 of an industrial automation software package, accessible via a web browser or running as a native application, within which the project generation process 300 of FIG. 4 may be implemented. The dashboard 400 may include a horizontal information bar 402 and a primary window 404. As shown, the horizontal information bar 402 may include an indication of the industrial automation software package (e.g., a name of the software package) on one end and selectable drop-down menus for an organization profile 406 and a user profile 408, and a help button 410 on an opposite end. When the help button 410 is selected, the dashboard 400 may present options to allow a user to contact live support, view information regarding features of the dashboard 400, provide feedback, or otherwise help the user navigate the dashboard 400. While other aspects of the dashboard 400 may change as different options or buttons within the primary window 404 are selected, the horizontal information bar 402 remains mostly constant during use of the dashboard 400.

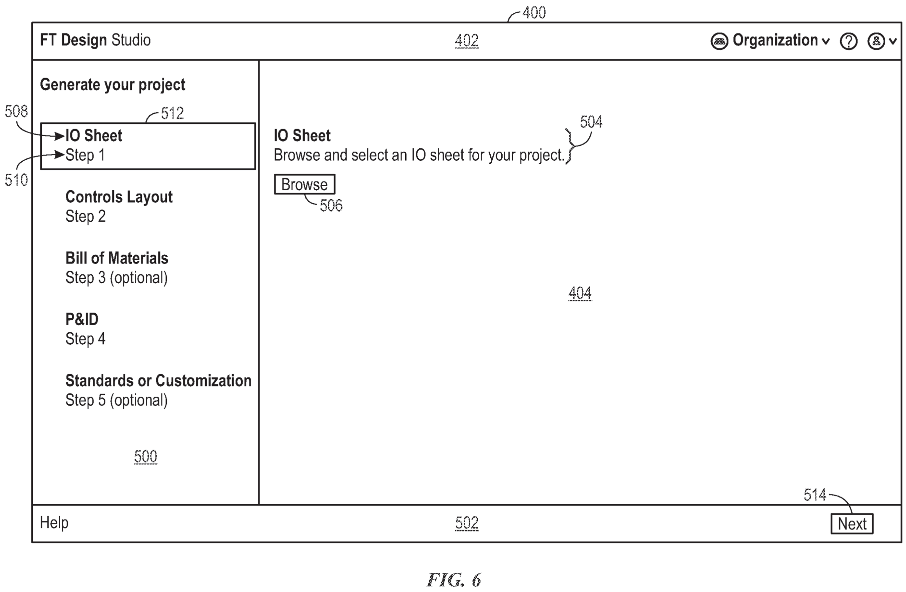

As shown in FIG. 5, the primary window 404 may display a navigation or start window 412 with selectable options for a user to create a new project file or open an existing project file. In the embodiment shown in FIG. 5, the start window 412 includes a create new project button 414, an auto-generate a project button 416, and an open an existing project button 418. When the create a new project button 414 is selected, the dashboard 400 may present the user with a blank project file within the primary window 404 and additional windows, navigation tabs, and features to build out the project file, such as a library window containing drag-and-drop objects (e.g., visual representations of different industrial automation devices associated or embedded with portions of programmatic code), a design window to receive drag-and-drop objects from the library window to define or build out the project file, and the like. When the open an existing project button 418 is selected, the dashboard 400 may present the user with options to open a project file saved locally (e.g., on the memory 106 of the computing device 26) or remotely (e.g., on the cloud server 30). Once the user has selected an existing project file, the dashboard 400 may present the project file within the primary window 404 with substantially the same additional windows, navigation tabs, and features to modify the existing project as used to create a new project (e.g., a library window of objects, a design window, etc.). As discussed in more detail below with regards to FIGS. 6-13, when the auto-generate a project button 416 is selected, the dashboard 400 may guide the user through a series of questions and prompts to auto-generate a project in accordance with the process 300 of FIG. 4.

FIG. 6 is a screenshot of the dashboard 400 when a user selects the auto-generate a project button 416 from the start window 412. As shown, when the auto-generate a project button 416 is selected, the dashboard 400 may include a listing 500 of steps associated with the auto-generation process and a horizontal navigation bar 502 extending along a bottom edge of the primary window 404. The primary window 404 may display the current step of the auto-generation process, such as a request for a specific type of documentation 304. For example, in the instant embodiment, when a user selects the auto-generate a project button 416, the primary window 404 may first display a request for an I/O sheet 308. The request may include an indication 504 of the specific type of documentation 304 or additional information being requested, such as a name of the type of documentation 304 (e.g., "IO Sheet") and a brief description of the request ("Browse and select an IO sheet for your project"), along with a browse button 506. When the browse button 506 is selected, the dashboard 400 may open an explorer window that allows a user to locate a file to upload or import, such as an I/O sheet stored locally (e.g., on the memory 106 of the computing device 26) or remotely (e.g., in the cloud server 30).

The listing 500 of steps may include a numbered list of each step of the auto-generation process. Each entry in the listing 500 may include a descriptive name or title 508 (e.g., "IO Sheet") which may indicate a type of documentation 304 or additional information associated with the respective step, along with a subtitle 510 (e.g., "Step 1") which may indicate the number or order associated with the respective step. The subtitle 510 may also indicate if the respective step is optional or required. For example, the subtitle 510 of optional steps may include "optional" after the indication of the number associated with the respective step (e.g., "Step 5 (optional)"). Further, the listing 500 may include an indication 512 of the current step of the auto-generation process. The indication 512 may highlight the current step of the auto-generation process using a colored bar over the entry, bolded text, or any other suitable method to emphasize the current step.

In certain embodiments, the listing 500 may be scrollable. That is, a user may scroll through or otherwise select (e.g., click, tap, etc.) an entry from the listing 500 to navigate to the associated step. Users may navigate to previous steps to review and/or modify their inputs (e.g., upload a different file, upload an additional file, change their answers to questions, etc.). Additionally, users may advance to the next step if they respond to the current step (e.g., by uploading a file, providing a textual input, etc.) or if the current step is optional regardless of whether they respond.

Users may also interact with the horizontal navigation bar 502 to navigate through the steps of the auto-generation process. The horizontal navigation bar 502 may include a next button 514 that when selected advances to the next step in the listing 500. As shown in FIG. 6, the next button 514 may not accept user inputs when the current step is required and the requested documentation 304 associated with the step has not been uploaded. The appearance of the next button 514 may update to indicate whether advancing to the next step is allowed. For example, as shown in FIG. 6, the next button 514 may be grayed out or otherwise deemphasized to indicate that advancing to the next step is not permitted.

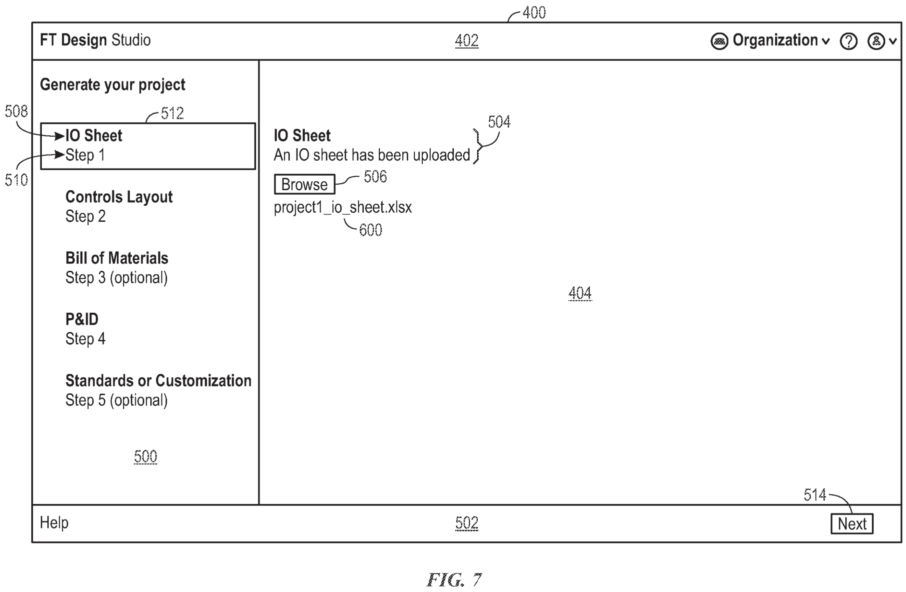

FIG. 7 is a screenshot of the dashboard 400 when a user uploads an input output (I/O) sheet 308 (e.g., via the browse button 506 and subsequently navigating to the file). As shown, the primary window 404 may update to include an indication 600 of the uploaded file (e.g., I/O sheet 308). For example, the primary window 404 may display the indication 600 as a file name of the I/O sheet 308 (e.g., "project1_io_sheet.xlsx") beneath the browse button 506. Further, the indication 504 of the request may update to indicate that the request has been satisfied. For example, the brief description of the request may change from "Browse and select an IO sheet for your project" to "An IO sheet has been uploaded." Additionally, the appearance of the next button 514 may update to indicate that the user may navigate to the next step in the auto-generation process. For example, as shown in FIG. 7, the next button 514 may be highlighted or otherwise emphasized to indicate that advancing to the next step is permitted.

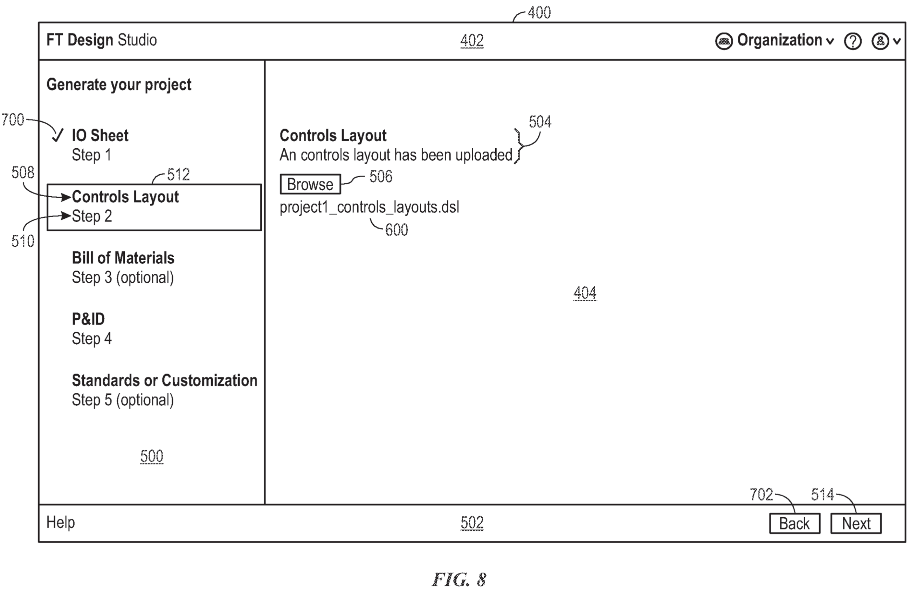

When the next button 514 is selected, the dashboard 400 may update to display the next step in the auto-generation process. For example, FIG. 8 is a screenshot of the dashboard 400 when a user selects the next button 514 and uploads a controls layout 312 (e.g., via the browse button 506). As shown, the primary window 404 may update to reflect the current step in the auto-generation process (e.g., Step 2). For example, the primary window 404 may display updated versions of the indication 504 of the request and the indication 600 of the uploaded file to reflect that a controls layout 312 has been requested and received. Additionally, the listing 500 may update to reflect the current step in the auto-generation process. For example, the indication 512 of the current step may move down the listing 500 to highlight the next entry in the listing 500 (e.g., move from "IO Sheet - Step 1" to "Controls Layout - Step 2"). Further, the listing 500 may update to include an indication 700 that the previous step has been completed, such as a checkmark next to the descriptive name or title 508 of the previous step.

The horizontal navigation bar 502 may also update in response to user inputs (e.g., when the next button 514 is selected). For example, the horizontal navigation bar 502 may display a back button 702 to the left of the next button 514. When selected, the back button 702 may cause the display 400 to render the previous step in the auto-generation process (e.g., render Step 1 as shown in FIG. 7 when the back button 702 is selected on Step 2 as shown in FIG. 8). Accordingly, users may utilize the back button 702 to navigate to previous steps to review and/or modify their inputs (e.g., upload a different file, upload an additional file, change their answers to questions, etc.).

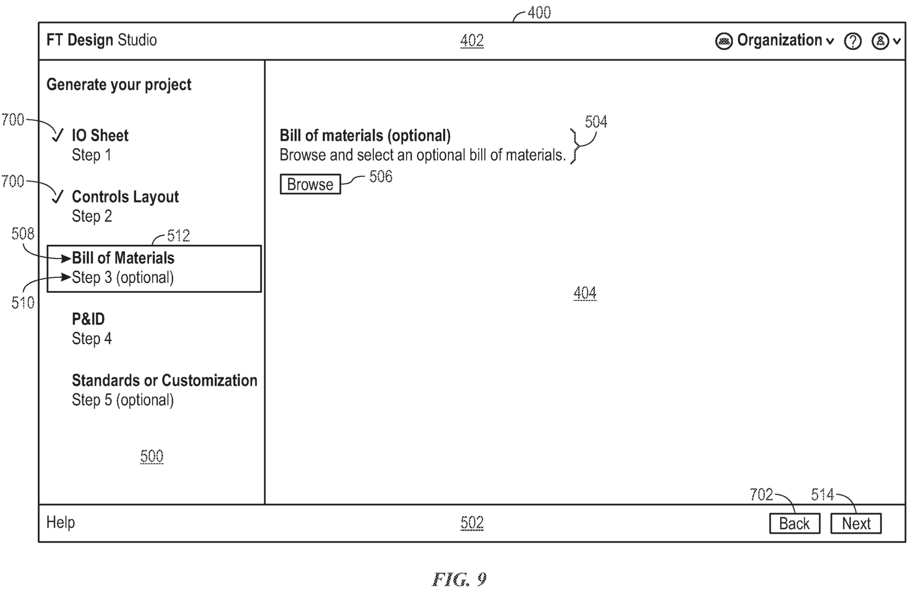

FIG. 9 is a screenshot of the dashboard 400 displaying a request for an optional bill of materials (BOM) 310. The dashboard 400 may update to display the request for an optional BOM 310 in response to user inputs advancing from the previous step shown in FIG. 8 (e.g., via the next button 514 or the scrollable listing 500). The display 400 may indicate that a BOM 310 is optional in a variety of ways, such as within the indication 504 of the request, within the subtitle 510 of the respective entry in the listing 500, and within the horizontal navigation bar 502. For example, the indication 504 of the request may include "optional" next to the name of the specific type of documentation 304 being requested (e.g., "Bill of Materials (optional)"), and the brief description of the request may indicate that the request is optional (e.g., "Browse and select an optional bill of materials"). Likewise, the subtitle 510 may be "Step 3 (optional)" to indicate that a BOM 310 is optional. Further, the user may utilize the scrollable listing 500 and/or the next button 514 to advance to the next step without uploading a BOM 310. Accordingly, the next button 514 may be highlighted or otherwise emphasized to indicate that advancing to the next step is permitted regardless of whether a BOM 310 is uploaded.

While not shown, the primary window 404 may update accordingly if the user uploads a BOM 310. For example, the primary window 404 may update to include an indication 600 of the uploaded file, such as a file name (e.g., "bom1_ xlsx") beneath the browse button 506, and the brief description of the indication 504 of the request may change from "Browse and select an optional bill of materials" to "A bill of materials has been uploaded."

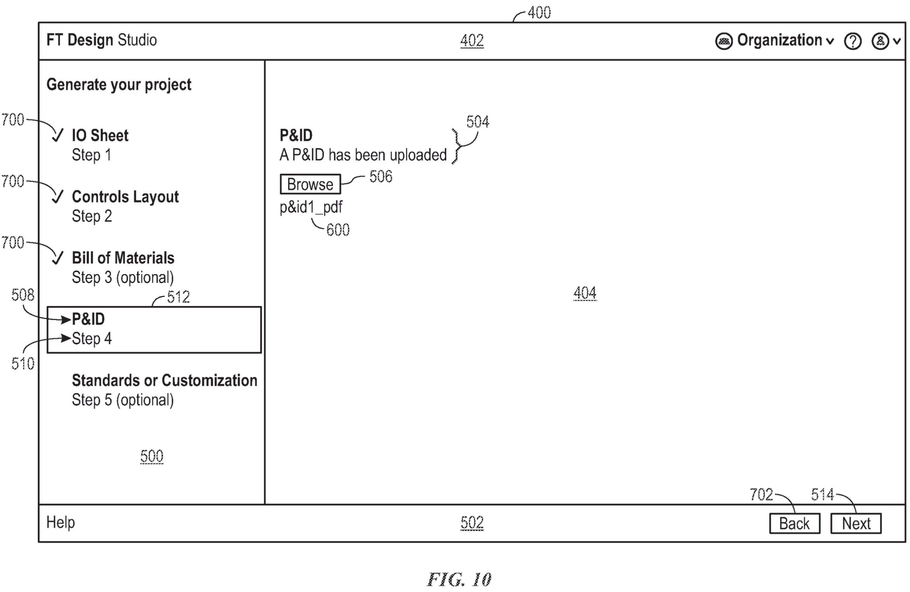

FIG. 10 is a screenshot of the dashboard 400 after a user uploads a piping and instrumentation diagram (P&ID) 306 in response to a request for a P&ID 306 displayed in the primary window 404. As shown, the primary window 404 may update to include the indication 600 of the uploaded file as a file name of the P&ID 306 (e.g., "p&id1_pdf") beneath the browse button 506. Further, the indication 504 of the request may include the brief description "A P&ID has been uploaded" to indicate that the request has been satisfied. The listing 500 may also update accordingly. For example, the indication 512 of the current step may highlight the entry for P&ID and step 4, and the previous entries (e.g., steps 1-3 associated with an I/O sheet 308, controls layout 312, and BOM 310, respectively) may include indications 700 that they have been completed, such as checkmarks next to each respective title 508.

Accordingly, FIGS. 6-10 illustrate how the computing device 26 or any other suitable computing device may request and receive documentation 304 to auto-generate custom industrial automation projects within a dashboard 400 of an authoring tool. While FIGS. 6-10 illustrate the dashboard 400 requesting different types of documentation 304 in a particular order (e.g., I/O sheet 308 first, controls layout 312 second, BOM 310 third, P&ID 306 fourth), the dashboard 400 may request the documentation in any other suitable order and/or concurrently (e.g., the primary window 404 may display a request for multiple different types of documentation 304 at the same time). Additionally, while FIGS. 6-10 illustrate the dashboard 400 requesting and receiving four different types of documentation, the dashboard 400 may request more or fewer types of documentation 304. For example, the dashboard 400 may not request a BOM 310 or may request additional types of documentation 304, such as hand drawn schematics and process diagrams, in addition to those shown in FIGS. 6-10. Further, while FIGS. 6-10 illustrate uploading a BOM 310 as optional, a BOM 310 may be required and/or different types of documentation 304 may be optional (e.g., an I/O sheet 308) in certain embodiments.

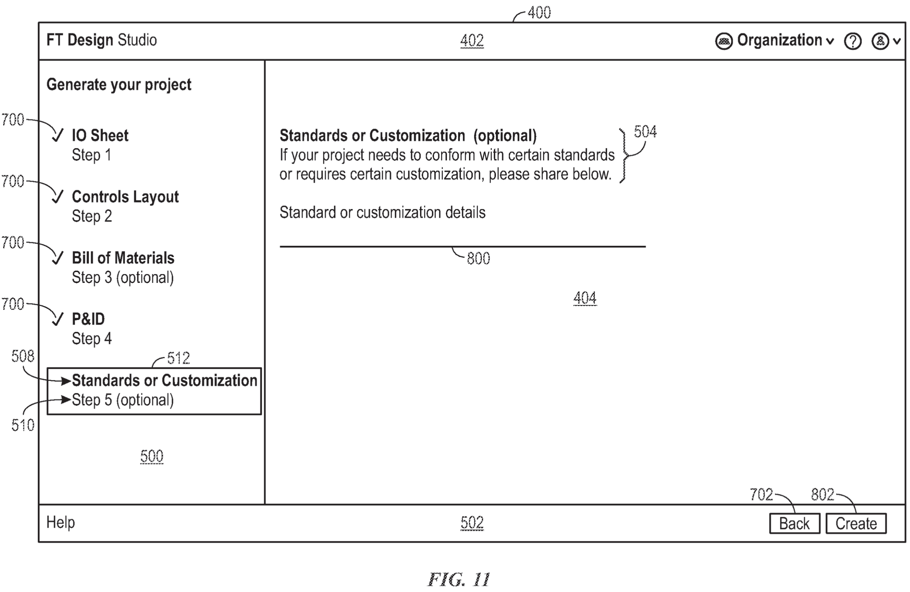

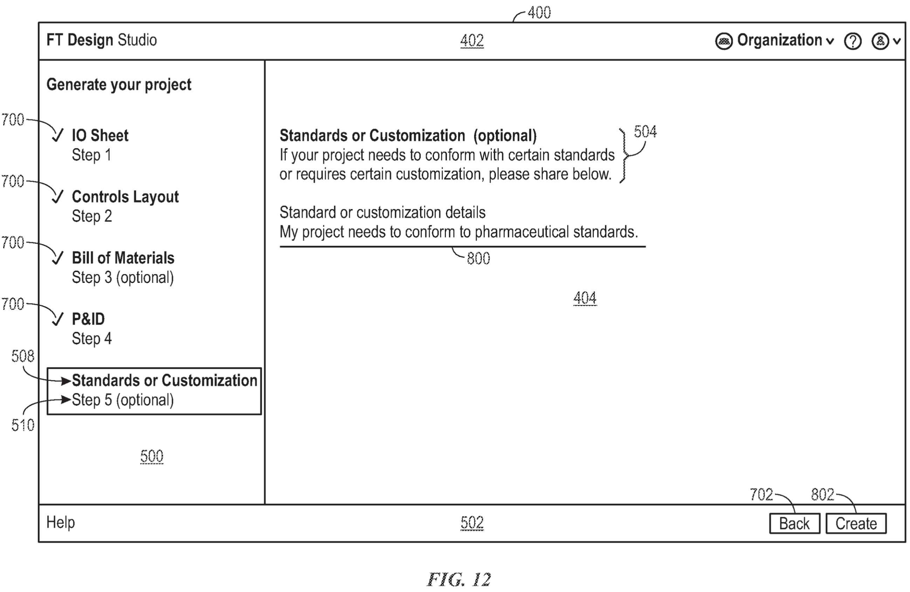

The dashboard 400 may also display questions or prompts requesting additional information during the auto-generation process. For example, FIG. 11 is a screenshot of the dashboard 400 when a user may provide additional standards or customization details. As shown, the primary window 404 may update to include an input line 800 rather than the browse button 506. Further, the indication 504 of the request may include the brief description "If your project needs to conform with certain standards or requires certain customization, please share below" to give the user context and indicate what type of additional information is being requested. As shown in FIG. 12, the user may use the input line 800 to provide additional information, such as a text input "My project needs to conform to pharmaceutical standards." While FIGS. 11 and 12 show the primary window 404 including the input line 800 to request and receive text from the user, the primary window may additionally or alternatively include a drop-down menu of preset selectable standards or customization details, such as a listing of industry standards (e.g., pharmaceutical standards, food safety standards, environmental standards, etc.) to request and receive additional information.

In the illustrated embodiment, requesting additional standards or customization details is the final step in the auto-generation process. Accordingly, the horizontal navigation bar 502 may update to display a create button 802 rather than the next button 514. When selected, the create button 802 may cause the dashboard 400 to display a loading screen while the uploaded documentation 304 and additional information is pre-processed and run through a machine learning model to generate the custom project, as described above with regards to FIG. 4. While FIGS. 6-12 show the auto-generation process including five steps, it should be noted that the display 400 may guide the user through more or fewer steps. For example, the dashboard 400 may request additional types of documentation, such as hand drawn schematics and process diagrams, and/or information from the user, such as a desired project title, and the like.

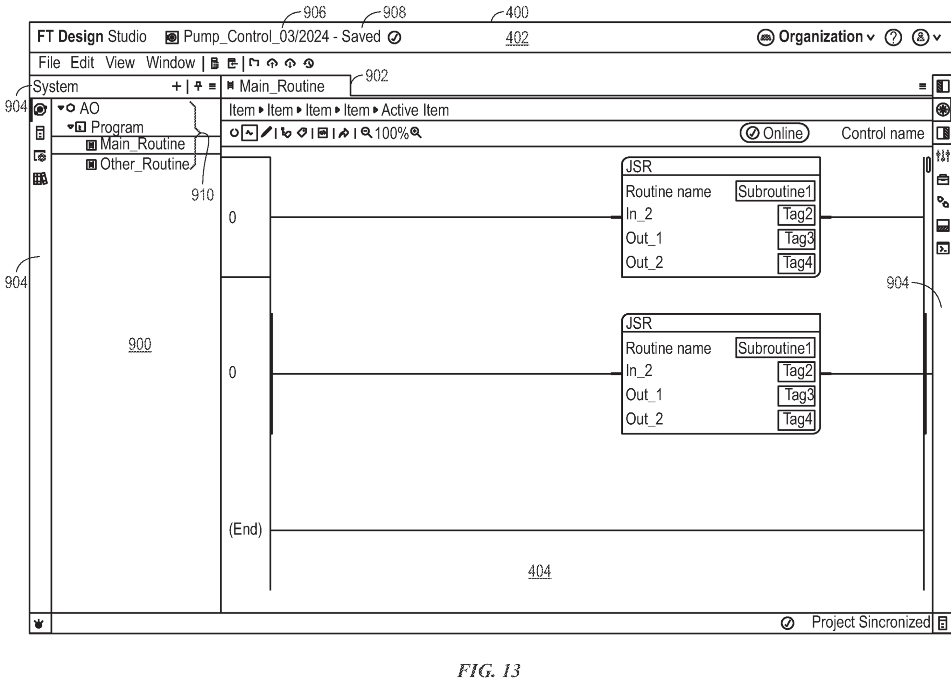

When the machine learning model finishes generating the custom project file based on the received documentation 304 and additional information, the dashboard 400 may update to display the custom project file. FIG. 13 is a screenshot of the dashboard 400 displaying a custom project file. As shown, the dashboard 400 may update to include an explorer window 900 along a left side of the primary window 404, one or more selectable tabs 902 along a top edge of the primary window 404, and one or more toolbars 904 with selectable options to modify, edit, and save the custom project file. In the illustrated embodiment, the custom project file is a totalizer routine. The user may interact with the dashboard to add, remove, or modify features of the project file, such as the names of routines, tags, input/output relationships, and the like. The user may interact with the dashboard 400 to save the custom project file locally (e.g., on the memory 106 of the computing device 26) and/or remotely (e.g., on the cloud server 30).

The horizontal information bar 402 may update to include a file name 906 of the custom project file (e.g., "Pump_Control_03/2024"). The file name 906 may be generated by the machine learning model based on content extracted from the received documentation, and/or be a generic placeholder (e.g., "custom_project_1"). The user may interact with the dashboard 400 to edit the file name 906. The horizontal information bar 402 may also include an indication 908 of whether or not the project file has been saved since the most recent modification or edit. In the illustrated embodiment, the indication 908 includes the text "Saved" next to a checkmark icon to indicate that the saved version of the file is up to date. The indication 908 may update in real time as the user makes edits to the project. Accordingly, the indication 908 may update to include the text "Out of sync," "Unsaved edits," or any other suitable text indicative of unsaved edits, along with a suitable icon (e.g., exclamation mark), when the user makes unsaved edits to the project. Additionally, or alternatively, the indication 908 may only appear when the saved version is up to date (e.g., appears and disappears as new edits are made and saved).

The explorer window 900 may include a collapsable listing 910 of different portions of the project file (e.g., "Main_Routine," "Other_Routine"), which when selected may cause the primary window 404 to display the selected portion of the project file. Additionally, the user may interact with the one or more selectable tabs 902 to cause the primary window 404 to display a portion of the project file associated with the selected tab 902 and/or close the associated portion of the project file. While not shown, multiple portions of the custom project file may be open at one time, in which case each portion may be associated with a selectable tab 902.

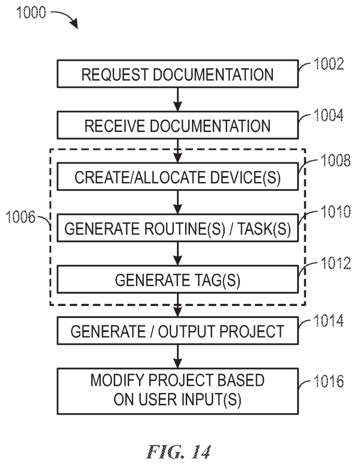

FIG. 14 is a flow chart of a process 1000 for auto-generating a custom industrial automation project based on user documentation 304, such as the totalizer routine shown in FIG. 13. Although the following description of the process 1000 is described in a particular order, which represents a particular embodiment, it should be noted that the process 1000 may be performed in any suitable order. Moreover, it should be noted that the process 1000 may be performed by any suitable computing device (e.g., computing device 26, operator device 234), or a combination of computing devices, within the OT environment.

At block 1002, the process 1000 may request documentation 304 from a user of an industrial automation project authoring tool. For example, the process 1000 may display the start window 412 of the dashboard 400, as shown in FIG. 5, and may request different types of documentation 304 in a step-by-step fashion in response to the user selecting the auto-generate a project button 416, as shown in FIGS. 6-10. Additionally, or alternatively, the process 1000 may prompt the user to upload different types of documentation 304 concurrently, or substantially at the same time (e.g., via the primary window 404 of the dashboard 400). At block 1004, the process 1000 may receive or retrieve some or all of the requested documentation. For example, the user may select the browse button 506 to open an explorer window to locate one or more files to upload or import from the memory 106 of the computing device 26 and/or from the cloud server 30.

At sub-process 1006, the process 1000 may utilize natural language processing and generative AI to extract relevant features from the received documentation 304 to build out the custom project file. The sub-process 1006 may include a collection of blocks that represent different aspects of the extraction process. The blocks shown in FIG. 14 are exemplary and the sub-process 1006 may include only some of the blocks shown, may include different combinations of blocks, may include a different order of blocks, or may include additional blocks not shown in FIG. 14.

At block 1008, the process 1000 may determine which devices to include in the project file based on the received documentation 304. For example, the process 1000 may define and allocate devices and controllers within the custom project file based on information extracted from a controls layout 312. As described above, controls layouts 312 describe the physical arrangement and organization of components within a control system. Accordingly, the process 1000 may extract information from a controls layout 312 (e.g., via the pre-processing and machine learning techniques described above in regard to FIG. 4) to determine which devices to include in the custom project file.

At block 1010, the process 1000 may determine which routines and/or tasks to include in the project file based on the received documentation 304. For example, the process 1000 may generate and define routines and tasks within the custom project file based on information extracted from a P&ID 306 and/or an I/O sheet 308. As described above, P&IDs 306 are schematic diagrams of industrial processes that capture how devices and control systems interact to carry out the processes, and I/O sheets 308 include a list of the inputs and outputs of a control system. Accordingly, the process 1000 may extract information from a P&ID 306 and/or an I/O sheet 308 (e.g., via the pre-processing and machine learning techniques described above in regard to FIG. 4) to determine which routines and tasks to include in the custom project.

At block 1012, the process 1000 may generate tags based on the received documentation 304. For example, the process 1000 may generate tags within the custom project file based on information extracted from a BOM 310, an I/O sheet 308, a controls layout 312, or a combination thereof. As described above, BOMs 310, I/O sheets 308, and controls layouts 312 may include information regarding specific devices and relationships between devices within an industrial system. Accordingly, the process 1000 may extract information from BOM 310, an I/O sheet 308, a controls layout 312, or a combination thereof (e.g., via the pre-processing and machine learning techniques described above in regard to FIG. 4) to create tags to include in the custom project file.

At block 1014, the process 1000 may generate or output a custom project file based on the features extracted at sub-process 1006. For example, the process 1000 may display the custom project file via the primary window 404 of the dashboard 400, as shown in FIG. 13, or using any other suitable graphical user interface (GUI). The custom project file may be generated using a large language model trained according to a number (e.g., thousands) of lines of programmatic code and a set of industrial automation rules. The lines of programmatic code may be portions of historical industrial automation projects (e.g., projects associated with or used to control a physical industrial automation system in the past), entire historic industrial automation projects, portions of theoretical industrial automation projects (e.g., projects that follow industrial automation rules but are not associated with or being used to control a physical industrial automation system), or a combination thereof. The set of industrial automation rules may include guidelines that define or dictate relationships between industrial automation devices or components. For example, the set of rules may define or dictate connections between devices (e.g., a rule that an input of one device should not be connected to an input of another device), a preference that two devices should not be used together, a preference that two devices should be used together, and the like. The set of rules may also reflect preferences for the industrial automation project, such as naming conventions within the project, and the like. Accordingly, the custom project file may include devices, routines, tasks, and tags based on information extracted directly from the documentation 304 and synthesized based on industrial automation rules and existing project files.

At block 1016, the process 1000 may modify the custom project file based on user inputs. For example, the user may interact with a GUI (e.g., dashboard 400) to add additional components (e.g., objects representing industrial automation devices, controllers, routines, etc.) or connections, rename components or aspects of the project, allocate specific devices or controllers to functions within the project, add or modify tags within the project, and the like. The user may also convert the project file into a desired file format (e.g., from a .XML file to a .L5X file). Accordingly, the auto-generated project file may be edited and modified as desired.

Additionally, while the process 1000 of FIG. 14 is described in the context of generating a new project file based on user documentation 304, the computing device 26 may perform substantially the same process to troubleshoot or modify existing projects based on user documentation 304. For example, the computing device 26 may request and receive an existing project file before, after, or at the same time as requesting and receiving documentation 304. The computing device 26 may extract features from the existing project file and the documentation 304 (e.g., using natural language processing and generative AI), and output a modified copy of the existing project file based on the extracted features. The modified copy may emphasize any changes to the project file (e.g., new devices may be bolded and/or have an associated indicator, removed features may be displayed in a grayed out or semi-transparent matter, and the like). Additionally, or alternatively, the computing device 26 may generate a text summary describing edits, modifications, or suggestions associated with the auto-generated modified project, along with rationale associated with some or all of the changes. For example, the summary may indicate that a device was removed from the project file for being incompatible with another device, improperly connected to another device, and the like.

The disclosed techniques are directed towards generating custom industrial automation project files based on user documentation by leveraging AI or machine learning and natural language processing. For example, systems and methods of the present disclosure may utilize generative AI and natural language processing to identify devices by parsing controls layouts, generate routines and tasks by parsing process diagrams, create tags by parsing BOMs and/or controls layouts, and generate a project file containing these extracted features. The system may guide users (e.g., designers) through a series of questions and prompts requesting different types of user documentation and may generate and provide the users with project files based on their responses. Further, the system may allow users to edit and customize the generated project files. For example, users may add additional components or connections to the project, rename components or aspects of the project, and the like. Users may utilize the system to automatically generate new project files, as well as, to automatically troubleshoot or modify existing project files based on their documentation. Accordingly, by leveraging generative AI and documents users may already have on hand, the presently disclosed techniques may reduce design time for industrial automation systems, reduce human error in project files, and reduce the time users spend familiarizing themselves with authoring tools.

While only certain features have been illustrated and described herein, many modifications and changes will occur to those skilled in the art. It is, therefore, to be understood that the appended claims are intended to cover all such modifications and changes as fall within the true spirit of the disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for (perform)ing (a function)..." or "step for (perform)ing (a function)...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A non-transitory, tangible, computer readable medium comprising
instructions that, when executed by processing circuitry, causes the processing circuitry to perform operations comprising:
requesting a plurality of documents associated with an industrial automation system
receiving one or more documents of the plurality of documents;
extracting contextual data from the one or more documents; and
generating an industrial automation project by applying machine learning techniques on the contextual data, wherein the industrial automation system is configured to perform an industrial automation process based on the industrial automation project.

2. The computer readable medium of claim 1, at least one of:
wherein the plurality of documents comprises one or more piping and instrumentation diagrams (P&IDs), input/output (I/O) sheets, bills of materials (BOMs), controls layouts, or any combination thereof; and
wherein extracting contextual data from the one or more documents comprises performing natural language processing techniques on the one or more documents.

3. The computer readable medium of claim 1 or 2, wherein applying machine learning techniques on the contextual data comprises inputting the contextual data into a large language model (LLM).

4. The computer readable medium of claim 3, wherein the LLM is trained according to a set of industrial automation rules.

5. The computer readable medium of one of claims 1 to 4, wherein the operations comprise modifying the industrial automation project based on one or more user inputs.

6. The computer readable medium of one of claims 1 to 5, wherein the operations comprise receiving additional information regarding the industrial automation system, and wherein the industrial automation project is generated by applying machine learning techniques on the contextual data and the additional information, wherein preferably the additional information comprises an indication of one or more industry standards associated with the industrial automation system.

7. The computer readable medium of one of claims 1 to 6, wherein the contextual data comprises an indication of one or more components within the industrial automation system, one or more connections between components within the industrial automation system, one or more routines performed within the industrial automation system, or a combination thereof.

8. A method, comprising:
receiving one or more documents associated with designing an industrial automation system;
extracting contextual data from the one or more documents by performing natural language processing techniques on the one or more documents;
generating an industrial automation project by applying machine learning techniques on the contextual data, wherein the industrial automation project is configured to control one or more industrial automation devices within the industrial automation system to perform an industrial automation process;
presenting the industrial automation project within a graphical user interface (GUI); and
modifying the industrial automation project based on one or more user inputs received via the GUI.

9. The method of claim 8, wherein the one or more documents comprise a piping and instrumentation diagram (P&ID), an input/output sheet, a bill of materials, a controls layout, or a combination thereof.

10. The method of claim 8 or 9, comprising requesting the one or more documents in a step-by-step manner via the GUI.

11. The method of one of claims 8 to 10, at least one of:
wherein applying machine learning techniques on the contextual data comprises inputting the contextual data into a large language model (LLM) trained according to a set of industrial automation rules;
wherein the contextual data comprises an indication of the one or more industrial automation devices, one or more connections between the one or more industrial automation devices, one or more routines associated with the one or more industrial automation devices, or a combination thereof;
wherein modifying the industrial automation project comprises adding or removing one or more devices, allocating devices to one or more functions, creating or editing one or more tags, adding or removing one or more routines, renaming one or more components within the industrial automation project, or a combination thereof; and
comprising receiving additional information regarding the industrial automation system, wherein the additional information comprises an indication of one or more industry standards the industrial automation system is configured to comply with, and wherein the industrial automation project is generated by applying machine learning techniques on the contextual data and the additional information.

12. The method of one of claims 8 to 11, comprising:
receiving one or more additional documents;
extracting additional contextual data from the one or more additional documents by performing natural language processing techniques on the one or more additional documents;
generating a modified version of the industrial automation project by applying machine learning techniques on the additional contextual data; and
presenting the modified version of the industrial automation project within the GUI, wherein the GUI is configured to indicate one or more changes associated with the modified version of the industrial automation project.

13. A non-transitory, tangible, computer readable medium comprising instructions that, when executed by processing circuitry, causes the processing circuitry to perform operations comprising:
retrieving an industrial automation project configured to control one or more industrial automation devices within an industrial automation system;
requesting a plurality of documents associated with the industrial automation system;
receiving one or more documents of the plurality of documents;
extracting, via natural language processing techniques, contextual data from the one or more documents;
generating, via a machine learning model, a modified version of the industrial automation project based on the contextual data; and
presenting the modified version of the industrial automation project within a graphical user interface (GUI).

14. The computer readable medium of claim 13, wherein requesting the plurality of documents comprises displaying a request for a plurality of types of documentation within the GUI, wherein the plurality of types of documentation comprises piping and instrumentation diagrams (P&IDs), input/output (I/O) sheets, bills of materials (BOMs), and controls layouts, and wherein the GUI is configured to indicate one or more of the plurality of types of documentation as optional.

15. The computer readable medium of claim 14, wherein generating the modified version of the industrial automation project comprises adding or removing one or more devices within the industrial automation project, allocating devices to one or more functions within the industrial automation project, creating or editing one or more tags within the industrial automation project, adding or removing one or more routines within the industrial automation project, renaming one or more components within the industrial automation project, or a combination thereof.
